(19) Europäisches Patentamt
European Patent Office
Office européen des brevets

(11) **EP 3 689 680 A1**

(12) **EUROPÄISCHE PATENTANMELDUNG**

(43) Veröffentlichungstag:
05.08.2020 Patentblatt 2020/32

(51) Int Cl.:
**B60Q 1/115** (2006.01)

(21) Anmeldenummer: **20154456.6**

(22) Anmeldetag: **30.01.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **30.01.2019 DE 102019102326**

(71) Anmelder: **Automotive Lighting Reutlingen GmbH 72762 Reutlingen (DE)**

(72) Erfinder:
• **Seibold, Holger**
 **72805 Lichtenstein (DE)**
• **Welsner, Stefan**
 **72762 Reutlingen (DE)**
• **Baccarin, Davide**
 **72762 Reutlingen (DE)**

(74) Vertreter: **DREISS Patentanwälte PartG mbB Friedrichstraße 6 70174 Stuttgart (DE)**

(54) **KRAFTFAHRZEUGSCHEINWERFER UND VERFAHREN ZUM BETREIBEN EINES KRAFTFAHRZEUGSCHEINWERFERS**

(57) Es wird ein Kraftfahrzeugscheinwerfer (2) mit einer Lichtquelle (8) zur Erzeugung eines Abstrahllichtbündels (10) und mit einer Verstelleinrichtung (12) zur vertikalen Verstellung einer Neigung (14) des Abstrahllichtbündels (10) in Abhängigkeit von einer niederfrequenten Soll-Neigung (18) vorgeschlagen. Ein Sensor (24) ist zur Ermittlung eines hochfrequenten Sensorsignals (22) im Bereich des Kraftfahrzeugscheinwerfers (2) angeordnet. Die niederfrequente Soll-Neigung (18) des Abstrahllichtbündels (10) ist in Abhängigkeit von dem hochfrequenten Sensorsignal (22) ermittelbar. Die Neigung (14) des Abstrahllichtbündels (10) ist in Abhängigkeit von der ermittelten niederfrequenten Soll-Neigung (18) einstellbar.

EP 3 689 680 A1

Fig. 1

**Beschreibung**

Die Erfindung betrifft einen Kraftfahrzeugscheinwerfer nach dem Oberbegriff des Anspruchs 1 sowie ein Verfahren zum Betreiben eines Kraftfahrzeug Scheinwerfers nach dem Oberbegriff eines neben geordneten Anspruchs.

Aus dem Stand der Technik sind Kraftfahrzeugscheinwerfer bekannt, welche mit einer Lichtquelle eine Abstrahllichtbündels erzeugen. Des Weiteren weisen diese Kraftfahrzeugscheinwerfer eine Verstelleinrichtung zur vertikalen Verstellung einer Neigung des Abstrahllichtbündels in Abhängigkeit von einer niederfrequenten Soll-Neigung auf. Diese niederfrequente Soll-Neigung wird im Rahmen einer statischen Leuchtweitenregelung von einem vom Fahrer zu bedienenden Drehrad zur Verfügung gestellt. Beispielhaft sei auf die DE 10 2005 061 094 A1 verwiesen.

Ausgehend davon ist es die Aufgabe der Erfindung die statische Leuchtweitenregelung, LWR, zu verbessern.

Es wird vorgeschlagen, dass ein Sensor zur Ermittlung eines hochfrequenten Sensorsignals im Bereich des Kraftfahrzeugscheinwerfers angeordnet ist, dass die niederfrequente Soll-Neigung des Abstrahllichtbündels in Abhängigkeit von dem hochfrequenten Sensorsignal ermittelbar ist, und dass die Neigung des Abstrahllichtbündels in Abhängigkeit von der ermittelten niederfrequenten Soll-Neigung einstellbar ist.

Auf diese Art und Weise kann vorteilhaft sowohl auf ein manuell zu verstellendes Bedienelement als auch auf Achssensoren verzichtet werden, um die Neigung des Abstrahllichtbündels präzise einzustellen. Neben der Vereinfachung und den verringerten Kosten aufgrund des Wegfalls des Bedienelements und der Achssensoren ergibt sich vorteilhaft eine verbesserte Bedienung, da die Einstellung der Neigung des Abstrahllichtbündels automatisch ohne Eingriff des Fahrzeuglenkers erfolgt.

Weitergehend wird es dadurch möglich, auf weitere Änderungen der Kommunikationsarchitektur zu verzichten, da beispielsweise keine weiteren Informationen wie beispielsweise die Fahrzeuggeschwindigkeit benötigt werden.

Weitere Vorteile und Merkmale der Erfindung ergeben sich aus der nachfolgenden Beschreibung der Zeichnung. In der Zeichnung zeigen:

Figur 1 in schematischer perspektivischer Ansicht einen Kraftfahrzeugscheinwerfer;

Figur 2 ein schematisches Blockdiagramm;

Figur 3 ein schematisches Ablaufdiagramm; und

Figur 4 in schematischer Ansicht ein Scheinwerfersystem

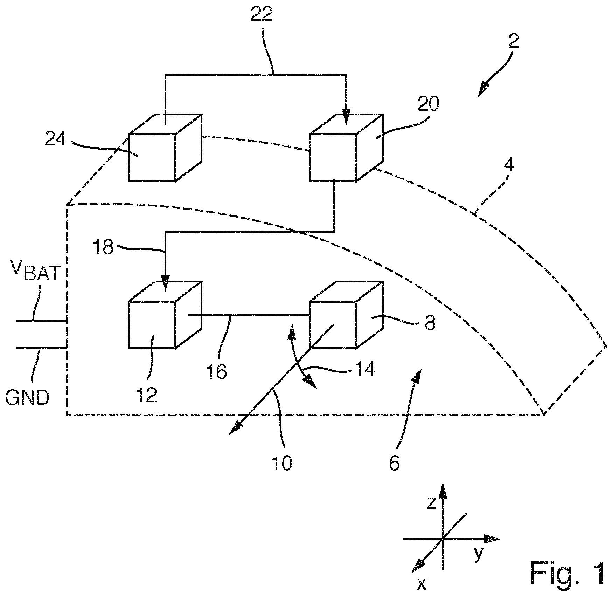

Figur 1 zeigt in schematischer perspektiver Ansicht einen Kraftfahrzeugscheinwerfer 2. Eine Lichtaustrittsöffnung eines Gehäuses 4 ist mit einer Abdeckscheibe 6 verschlossen. Eine Lichtquelle 8 erzeugt unter Zuhilfenahme weiterer nicht dargestellter optischer Elemente ein Abstrahllichtbündel 10, welches im Wesentlichen in eine Hauptabstrahlrichtung x, welche mit einer Fahrtrichtung des Kraftfahrzeugs übereinstimmt, von den Kraftfahrzeugscheinwerfer 2 abgestrahlt wird.

Eine Verstelleinrichtung 12 ist derart mit der Lichtquelle 8 gekoppelt, sodass eine vertikale tatsächliche Neigung 14, also die Ist-Neigung des Abstrahllichtbündels 10 oder Teilen davon verstellbar ist. Die Kopplung der Lichtquelle 8 mit der Verstelleinrichtung 12 kann mechanischer Art sein, beispielsweise eine Kippen eines optischen Elements oder der Lichtquelle 8 um eine Achse parallel zu y-Achse erlauben. Selbstverständlich kann die Kopplung auch elektronischer Art sein und ein Ein-/Ausschalten von Teillichtquellen der Lichtquelle 8 umfassen.

Der Verstelleinrichtung 12 wird eine niederfrequente Soll-Neigung 18 zugeführt, welche mittels eines Steuergeräts 20 ermittelt wird. Die niederfrequente Soll-Neigung 18 wird in Abhängigkeit von einem hochfrequenten Sensorsignal 22, welches von einem Sensor 24 erzeugt wird, ermittelt.

Das Steuergerät 20 und der Sensor 24 können wie dargestellt außerhalb des Gehäuses 4 angeordnet sein. Selbstverständlich können das Steuergerät 20 und der Sensor 24 auch innerhalb des Gehäuses 4 angeordnet sein. Besonders bevorzugt ist eine Integration der Verstelleinrichtung 12, des Steuergeräts 20 und des Sensors 24 innerhalb des Gehäuses 4. Insbesondere umfasst die Verstelleinrichtung 12 einen Elektromotor und das Steuergerät 20 ist Teil einer Motorsteuerung des Elektromotors.

Bevorzugt ist, dass das Abstrahllichtbündel 10 ein Abblendlichtbündel ist, und die vertikale Neigung einer Hell-Dunkel-Grenze des Abblendlichtbündels in Abhängigkeit von der niederfrequenten Soll-Neigung 18 verstellt wird. Bevorzugt werden der Verstelleinrichtung 12 ein Spannungssignal VBat und ein Masseanschluss GND zugeführt. Des Weiteren ist bevorzugt, das als einziges veränderliches und auf Basis eines Sensors, vorliegend des Sensors 24, ermittelten Signals das Sensorsignal 22 zur Ermittlung der niederfrequenten Soll-Neigung 18 herangezogen wird. Alternativ kann mit oder ohne die Hilfe eines nicht gezeigten Gyroskops eine dynamische Leuchtweitenregelung unter Zuhilfenahme der Verstelleinrichtung 12 erfolgen.

Nach ECE R48 (Regelung Nr. 48 der Wirtschaftskommission der Vereinten Nationen für Europa (UN/ECE) - Einheitliche Bedingungen für die Genehmigung der Fahrzeuge hinsichtlich des Anbaus der Beleuchtungs- und Lichtsignaleinrichtungen) ergibt sich die Neigung des Abblendlichtbündels wie folgt: Entweder als der in Milliradiant ausgedrückte Winkel zwischen dem Strahl zu einem charakteristischen Punkt im waagerechten Teil der Hell-Dunkel-Grenze der Lichtverteilung des Scheinwerfers und der waagerechten Ebene oder durch den Schenkel dieses Winkels, dessen Lage in % Neigung angegeben wird, da die Winkel sehr klein sind (bei diesen kleinen Winkeln entspricht 1 % 10 mrad). Ist die Neigung in % Neigung ausgedrückt, so kann sie anhand der nachstehenden Formel errechnet werden:

$$( (h1 - h2) / L ) / 100$$

Darin ist: h1 die in Millimetern ausgedrückte Höhe des charakteristischen Punktes über dem Boden, die auf einem vertikalen Messschirm gemessen wird, der senkrecht zur Fahrzeuglängsmittelebene im waagerechten Abstand L aufgestellt ist; h2 die in Millimetern ausgedrückte Höhe des Bezugspunkts über dem Boden (der als Ausgangspunkt des Strahles zu dem durch h1 bestimmten charakteristischen Punkt angesehen wird); und L der in Millimetern ausgedrückte Abstand vom Messschirm zum Bezugspunkt. Werte mit negativem Vorzeichen geben die abwärts gerichtete Neigung an. Werte mit positivem Vorzeichen geben die aufwärts gerichtete Neigung an.

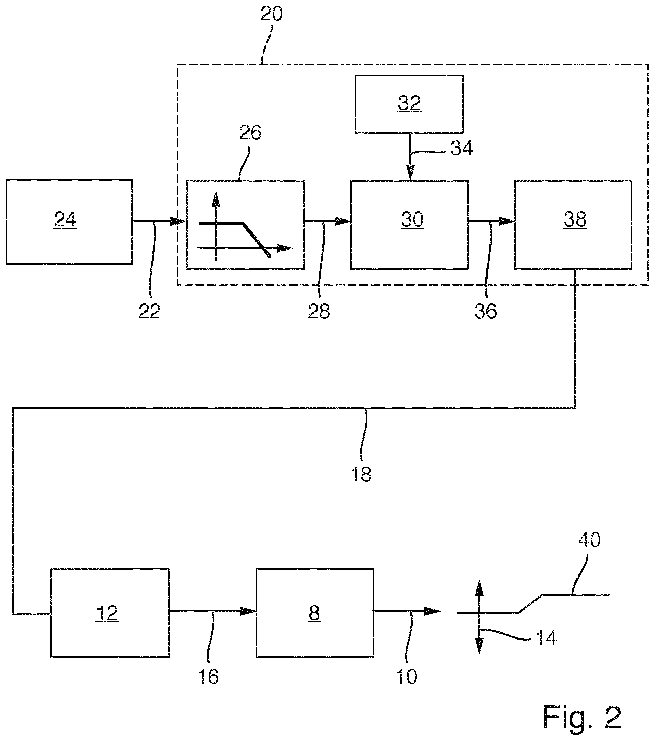

Figur 2 zeigt ein schematisches Blockdiagramm. Das hochfrequente Sensorsignal 22 ist vorliegend ein Beschleunigungssensorsignal und wird gemäß einem Block 26 einer Tiefpassfilterung unterzogen. Der Block 26 ermittelt ein Tiefpass-gefiltertes Sensorsignal 28, welches einem Block 30 zugeführt wird. In einem Speicher 32 sind Korrekturdaten 34 wie beispielsweise die Anordnung des Sensors 24 im Fahrzeug und/oder Sensorfehler abgespeichert. Auch können die Korrekturdaten 34 eine abwärts gerichtete Ausgangsneigung der Hell-Dunkel-Grenze des Abblendlichtbündels umfassen. In Abhängigkeit von dem gefilterten Sensorsignal 28 und den Korrekturdaten 34 ermittelt der Block 30 einen vertikalen Neigungswinkel 36. In Abhängigkeit von dem vertikalen Neigungswinkel 36 ermittelt ein Block 38 die niederfrequente Neigung 18, welche beispielsweise in Form eines analogen Stromsignals an die Verstelleinrichtung 12 weitergegeben wird.

Vorliegend ist das Abstrahllichtbündel 10 das Abblendlichtbündel. Alternativ kann das Abstrahllichtbündel 10 auch ein Fernlichtbündel oder ein Nebellichtbündel sein. Durch die Veränderungen der vertikalen Neigung 14, welche durch Veränderungen im hochfrequenten Sensorsignal 22 verursacht sind, wird die Hell-Dunkel-Grenze 40 des Abblendlichtbündels nach oben oder nach unten verschoben.

Das hochfrequente Sensorsignal 22 umfasst mehrfache Änderungen des Sensorsignals 22 im Bereich von Millisekunden oder geringeren Zeitabständen. Auf der anderen Seite umfasst die niederfrequente Soll-Neigung 18 mehrfache Änderungen des zugrunde liegenden Signals im Bereich von Sekunden oder darüber liegenden Zeitabständen. Die Häufigkeit von Änderungen in dem Sensorsignal 22 und in der Soll-Neigung 18 unterscheidet sich um zumindest eine halbe Zehnerpotenz.

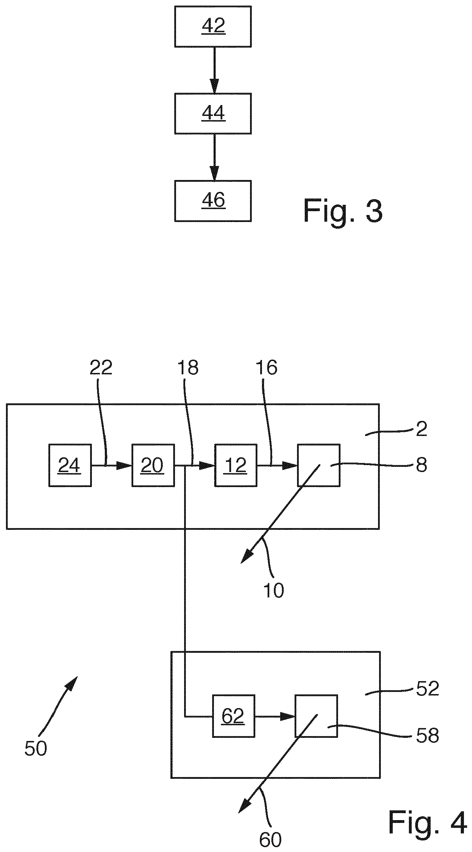

Figur 3 zeigt ein schematisches Ablaufdiagramm. In einem ersten Schritt 42 wird das hochfrequente Sensorsignal 22 ermittelt. In einem zweiten Schritt 44 wird die niederfrequente Soll-Neigung 18 in Abhängigkeit von dem hochfrequenten Sensorsignal 22 ermittelt. In einem dritten Schritt 46 wird die Neigung 14 des Abstrahllichtbündels 10 ermittelt.

Figur 4 zeigt in schematischer Ansicht ein Scheinwerfersystem 50 mit dem Kraftfahrzeugscheinwerfer 2 als Master-Kraftfahrzeugscheinwerfer und einem weiteren Kraftfahrzeugscheinwerfer 52 als Slave-Kraftfahrzeugscheinwerfer. Der weitere Kraftfahrzeugscheinwerfer 52 umfasst eine weitere Verstelleinrichtung 62 und eine weitere Lichtquelle 58, von der ein weiteres Abstrahllichtbündel 60 abgestrahlt wird. Ausgehend von dem Master-Kraftfahrzeugscheinwerfer 2 wird die ermittelte Soll-Neigung 18 nicht nur der Verstelleinrichtung 12 sondern auch der weiteren Verstelleinrichtung 62 zugeführt.

## Patentansprüche

1. Ein Kraftfahrzeugscheinwerfer (2) mit einer Lichtquelle (8) zur Erzeugung eines Abstrahllichtbündels (10) und mit einer Verstelleinrichtung (12) zur vertikalen Verstellung einer Neigung (14) des Abstrahllichtbündels (10) in Abhängigkeit von einer niederfrequenten Soll-Neigung (18), **dadurch gekennzeichnet,**

   - **dass** ein Sensor (24) zur Ermittlung eines hochfrequenten Sensorsignals (22) im Bereich des Kraftfahrzeugscheinwerfers (2) angeordnet ist,
   - **dass** die niederfrequente Soll-Neigung (18) des Abstrahllichtbündels (10) in Abhängigkeit von dem hochfrequenten Sensorsignal (22) ermittelbar ist, und
   - **dass** die Neigung (14) des Abstrahllichtbündels (10) in Abhängigkeit von der ermittelten niederfrequenten Soll-Neigung (18) einstellbar ist.

2. Der Kraftfahrzeugscheinwerfer (2) nach Anspruch 1, wobei das Abstrahllichtbündel (10) ein Abblendlichtbündel ist, und wobei die Neigung (14) einer Hell-Dunkel-Grenze (40) des Abblendlichtbündels in Abhängigkeit von der niederfrequenten Soll-Neigung (18) verstellbar ist.

3. Der Kraftfahrzeugscheinwerfer (2) nach dem Anspruch 1 oder 2, wobei die vertikale Soll-Neigung (18) ausgehend von einer abwärts gerichteten Ausgangsneigung des Abstrahllichtbündels (10) ermittelbar ist.

**4.** Der Kraftfahrzeugscheinwerfer (2) nach einem der vorstehenden Ansprüche, wobei die niederfrequente vertikale Soll-Neigung (18) der Abstrahllichtverteilung (10) mittels eines Tiefpassfilters in Abhängigkeit von dem hochfrequenten Beschleunigungssignal (22) ermittelbar ist.

**5.** Der Kraftfahrzeugscheinwerfer (2) nach einem der vorstehenden Ansprüche, wobei die Verstelleinrichtung (12) einen Elektromotor umfasst, und wobei der Sensor (24) Teil der Motorsteuerung des Elektromotors ist.

**6.** Der Kraftfahrzeugscheinwerfer (2) nach einem der vorstehenden Ansprüche, wobei der Sensor (24) ein 1D-, 2D- oder 3D-Beschleunigungssensor ist.

**7.** Ein Scheinwerfersystem (50) umfassend den Kraftfahrzeugscheinwerfer (2) nach einem der vorstehenden Ansprüche sowie einen weiteren Kraftfahrzeugscheinwerfer (52) mit einer weiteren Verstelleinrichtung (62), wobei die vertikale Neigung (14) eines weiteren Abstrahllichtbündels (60) des weiteren Kraftfahrzeugscheinwerfers (52) in Abhängigkeit von der ermittelten vertikalen Soll-Neigung (18) einstellbar ist.

**8.** Ein Verfahren zum Betreiben eines Kraftfahrzeugscheinwerfers (2), welcher eine Lichtquelle (8) zur Erzeugung eines Abstrahllichtbündels (10) und eine Verstelleinrichtung (12) zur vertikalen Verstellung einer Neigung (14) des Abstrahllichtbündels (10) in Abhängigkeit von einer niederfrequenten Soll-Neigung (18) umfasst, **dadurch gekennzeichnet,**

　　　- **dass** ein hochfrequentes Sensorsignal (22) ermittelt wird,
　　　- **dass** die niederfrequente Soll-Neigung (18) des Abstrahllichtbündels (10) in Abhängigkeit von dem hochfrequenten Sensorsignal (22) ermittelt wird,
　　　- und **dass** die Neigung (14) des Abstrahllichtbündels (10) in Abhängigkeit von der ermittelten niederfrequenten Soll-Neigung (18) eingestellt wird.

**9.** Das Verfahren nach dem Anspruch 8 zum Betreiben eines Scheinwerfersystems (50) nach Anspruch 7,

　　　- wobei die Neigung (14) des weiteren Abstrahllichtbündels (60) in Abhängigkeit von der im Bereich des anderen Kraftfahrzeugscheinwerfers (2) ermittelten niederfrequenten Soll-Neigung (18) eingestellt wird.

Fig. 1

Fig. 2

```
┌──────────┐
│    42    │
└──────────┘
      │
      ▼
┌──────────┐
│    44    │
└──────────┘
      │
      ▼
┌──────────┐
│    46    │
└──────────┘
```

Fig. 3

```
        22          18          16
┌────────────────────────────────────────────┐
│                                          ┌── 2
│  ┌────┐    ┌────┐    ┌────┐    ┌────┐        │
│  │ 24 │──▶ │ 20 │──▶ │ 12 │──▶ │    │────── 8
│  └────┘    └────┘    └────┘    └────┘        │
│                │                             │
└────────────────┼─────────────────────────┘
                 │              ╲
                 │               10
                 │
   50            │
    ↗            │
                 │    ┌─────────────────────────┐
                 │    │                      ┌── 52
                 │    │  ┌────┐    ┌────┐        │
                 └──── │ 62 │──▶ │    │────── 58
                      │  └────┘    └────┘        │
                      │              ╲           │
                      └───────────────┼──────────┘
                                     60
```

Fig. 4

**EP 3 689 680 A1**

Europäisches
Patentamt

European
Patent Office

Office européen
des brevets

# EUROPÄISCHER RECHERCHENBERICHT

Nummer der Anmeldung

EP 20 15 4456

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 963 385 A1 (MEMSIC INC [US]) 6. Januar 2016 (2016-01-06) | 1-4,6-9 | INV. B60Q1/115 |
| Y | * das ganze Dokument * | 5 | |
| X | DE 10 2016 122066 A1 (AUTOMOTIVE LIGHTING REUTLINGEN GMBH [DE]) 17. Mai 2018 (2018-05-17) * Absätze [0023] - [0052]; Abbildungen 1-3 * | 1-9 | |
| X | JP 2016 217902 A (MITSUBISHI ELECTRIC CORP) 22. Dezember 2016 (2016-12-22) * Absätze [0041] - [0056], [0066]; Abbildungen 1, 2 * | 1-9 | |
| X | DE 10 2017 005019 A1 (DAIMLER AG [DE]) 29. November 2018 (2018-11-29) * Absätze [0044] - [0050]; Abbildungen 1-4 * | 1-9 | |
| X | JP 2002 337600 A (ICHIKOH INDUSTRIES LTD) 27. November 2002 (2002-11-27) * das ganze Dokument * | 1-9 | RECHERCHIERTE SACHGEBIETE (IPC) |
| Y | CN 208 149 163 U (HUAYU VISION TECH SHANGHAI CO LTD) 27. November 2018 (2018-11-27) * das ganze Dokument * | 5 | B60Q |
| A | DE 199 06 208 A1 (BOSCH GMBH ROBERT [DE]) 24. August 2000 (2000-08-24) * Absätze [0017], [0030]; Abbildung 1 * | 1-9 | |
| A | DE 10 2014 219004 A1 (CONTINENTAL TEVES AG & CO OHG [DE]) 24. März 2016 (2016-03-24) * Absätze [0007] - [0010] * | 1-9 | |

Der vorliegende Recherchenbericht wurde für alle Patentansprüche erstellt

| Recherchenort | Abschlußdatum der Recherche | Prüfer |
|---|---|---|
| München | 27. April 2020 | Sarantopoulos, A |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**EP 3 689 680 A1**

**ANHANG ZUM EUROPÄISCHEN RECHERCHENBERICHT
ÜBER DIE EUROPÄISCHE PATENTANMELDUNG NR.**

EP 20 15 4456

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-04-2020

| Im Recherchenbericht angeführtes Patentdokument | Datum der Veröffentlichung | Mitglied(er) der Patentfamilie | Datum der Veröffentlichung |
|---|---|---|---|
| EP 2963385 A1 | 06-01-2016 | CN 105291958 A<br>EP 2963385 A1<br>JP 2016026953 A<br>US 2016001695 A1 | 03-02-2016<br>06-01-2016<br>18-02-2016<br>07-01-2016 |
| DE 102016122066 A1 | 17-05-2018 | DE 102016122066 A1<br>EP 3541659 A1<br>WO 2018091529 A1 | 17-05-2018<br>25-09-2019<br>24-05-2018 |
| JP 2016217902 A | 22-12-2016 | JP 6370261 B2<br>JP 2016217902 A | 08-08-2018<br>22-12-2016 |
| DE 102017005019 A1 | 29-11-2018 | CN 110461651 A<br>DE 102017005019 A1<br>WO 2018215609 A1 | 15-11-2019<br>29-11-2018<br>29-11-2018 |
| JP 2002337600 A | 27-11-2002 | KEINE | |
| CN 208149163 U | 27-11-2018 | KEINE | |
| DE 19906208 A1 | 24-08-2000 | KEINE | |
| DE 102014219004 A1 | 24-03-2016 | CN 107003152 A<br>DE 102014219004 A1<br>EP 3198235 A1<br>KR 20170042697 A<br>US 2017276521 A1<br>WO 2016046194 A1 | 01-08-2017<br>24-03-2016<br>02-08-2017<br>19-04-2017<br>28-09-2017<br>31-03-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005061094 A1